# FASCICULE DE BREVET EUROPEEN

(11) **EP 3 628 386 B1**
(45) Date de publication et mention de la délivrance du brevet: **19.05.2021**
(21) Numéro de dépôt: 19199000.1
(22) Date de dépôt: 23.09.2019
(51) Int. Cl.: E04H 5/02, B01D 3/32, F25J 3/04

(54) **ENCEINTE DE COLONNE DE DISTILLATION**
GEHÄUSE FÜR DESTILLIERSÄULE
ENCLOSURE FOR DISTILLATION COLUMN

(30) Priorité: 27.09.2018 FR 1858884
(43) Date de publication de la demande: 01.04.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LEMAIRE, Franck, 75007 PARIS (FR)
(74) Mandataire: Air Liquide

(56) Documents cités:
- FR-A1- 2 692 663
- FR-A1- 3 018 904
- JP-A- H08 261 644
- US-A1- 2009 234 346

## Description

La présente invention est relative à une enceinte de colonne de distillation et à une méthode de transport d'une enceinte de colonne de distillation.

Les colonnes de distillation devant opérer à une température en dessous de l'ambiante sont disposées dans des enceintes isolées. Ces enceintes, appelées boîtes froides ont généralement une forme de cuboïde mais peuvent dans quelques cas avoir une forme cylindrique, comme illustrée dans JP08261644. La colonne peut également porter un revêtement isolant sans structure métallique pour l'entourer comme décrit dans FR3018904. FR2692663 décrit le cas où une colonne est maintenue sur un berceau et disposée à l'intérieur d'une enceinte cylindrique.

D'autres types de colonne de distillation peuvent également être contenues dans des enceintes pour des raisons de sécurité ou de confidentialité.

La présente invention vise à faciliter les transports d'une telle enceinte.

Elle vise également à réduire la surface occupée par une enceinte, la quantité de matière isolante qu'elle contient et donc le prix de l'appareil. La forme courbe d'une partie de l'enceinte permet de laisser moins d'espace entre la colonne et la paroi de l'enceinte, en éliminant au moins deux coins, voire tous les coins, puisque l'enceinte formée n'a que deux coins au total, voire aucun. La zone de coins où deux tôles de l'enceinte sont rattachées est toujours une région où la risque de fissure est augmentée, avec la possibilité de formation de glace, néfaste pour l'appareil.

Cette nouvelle conception combine les avantages des deux formes composant l'enceinte, la partie cylindrique favorisant la résistance structurelle et la réduction de volume de l'appareil, y compris la prise sur sol, et la partie en forme de cuboïde facilitant l'installation des tuyauteries. De plus, la combinaison des deux formes a l'effet synergétique d'éliminer au moins une partie des coins.

Selon un objet de l'invention, il est prévu une enceinte selon la revendication 1.

Selon d'autres aspects facultatifs, qui peuvent être combinés les uns avec les autres :
- l'enceinte comprend trois parois planes rectangulaires entourant un premier espace en forme de cuboïde, les trois parois droites comprenant une première paroi plane reliée à un bord libre de la deuxième paroi plane par un angle droit et reliée à un bord libre de la troisième paroi plane par un angle droit ainsi qu'une paroi convexe, délimitant un deuxième espace constitué par une paroi convexe en dehors du premier espace.
- l'au moins une paroi convexe a un bord qui est un arc d'un cylindre droit circulaire ou oval et éventuellement le deuxième espace est un demi-cylindre.
- l'enceinte contient au moins deux colonnes de distillation superposées et éventuellement un stockage et/ou un échangeur de chaleur et/ou des conduites et/ou un séparateur de phases et/ou une autre colonne de distillation.
- l'enceinte ne contient qu'une seule colonne et éventuellement au moins un stockage.
- l'eneinte contient plusieurs colonnes.
- au moins un tiers du volume de l'élément cylindrique est situé dans le deuxième espace.
- seule une partie du volume de l'élément cylindrique est située dans le premier espace.
- la paroi convexe est un arc de cercle de diamètre D et l'élément cylindrique a une section en forme de cercle de diamètre d, les centres des cercles étant éloignés d'au plus 1 m, les cercles étant de préférence concentriques.
- le rapport d/D' est entre 0,6 et 0,95.
- l'enceinte contient de la matière isolante, par exemple étant remplie d'isolant pulvérulent.
- l'enceinte comprend une ossature en forme de cuboïde contenant des conduites et servant de support pour la colonne et/ou les conduites et/ou un échangeur de chaleur, l'ossature étant contenue entièrement dans le premier espace de l'enceinte.
- la paroi convexe est disposée face au vent prédominant.
- la colonne de distillation est partiellement contenue dans l'ossature.
- la séparation minimale entre la colonne et la paroi convexe la plus proche de la colonne et/ou entre l'autre élément et la paroi convexe la plus proche de l'autre élément est entre 400 mm et 1000 mm.
- l'élément cylindrique le plus proche de la paroi convexe et devant fonctionner à moins de 0°C, voire à une température cryogénique, a un diamètre d'au moins 50 cm, d'au moins 1m, voire au moins 2 m, de préférence au moins 4 m
- plus que le quart, voire la moitié du volume de l'enceinte est occupé par la colonne, pouvant être une simple colonne ou une double colonne constituée par deux colonnes superposées.
- moins qu'un tiers, voire moins que le quart du volume de l'enceinte est occupé par la colonne, pouvant être une simple colonne ou une double colonne constituée par deux colonnes superposées.
- la colonne de distillation est entièrement entourée d'isolation.
- la hauteur de la colonne est d'au moins 10 m.
- la hauteur des parois dans le sens vertical est supérieure à la hauteur de la colonne dans le sens vertical.

Selon un autre aspect, non revendiqué, il est prévu un appareil de séparation, par exemple d'air, par distillation cryogénique comprenant une enceinte telle que décrite ci-dessus.

Selon un autre aspect, non revendiqué, il est prévu une méthode de transport d'une partie d'une enceinte de colonne de distillation telle que décrite dans une des revendications précédentes dans lequel on transporte au moin une paroi convexe par un moyen de transport pouvant être un camion ou un bateau dans laquelle au moins une paroi convexe est disposée sur une surface plate du moyen de transport, reposant sur les bords libres de la paroi convexe.

Éventuellement plusieurs parois convexes destinées à faire partie, chacune, d'une enceinte sont empilées les unes sur les autres et sont transportées par le moyen de transport.

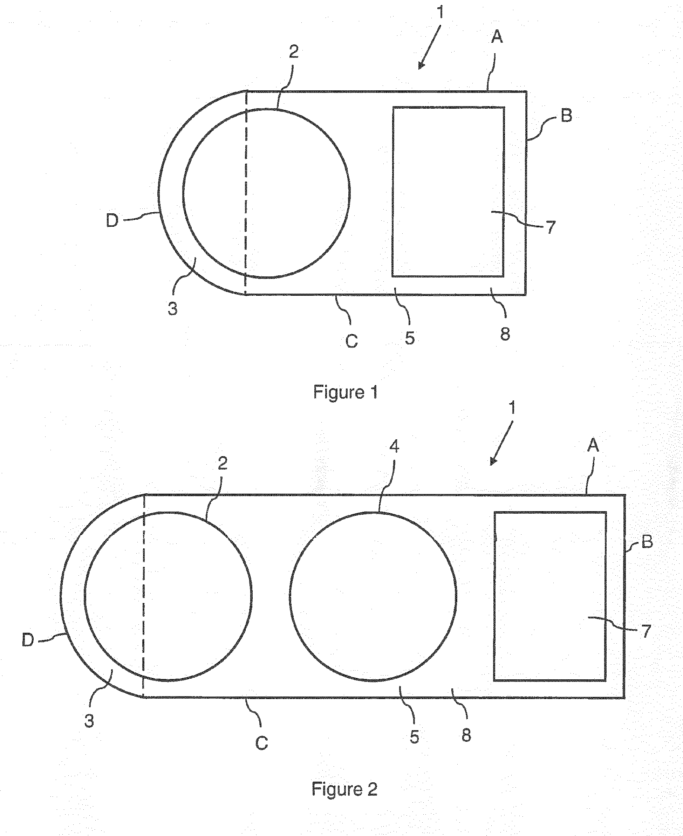

L'invention sera décrite de manière plus détaillée en se référant aux figures 1 à 4.

Les figures montrent des coupes d'une enceinte pour une colonne de distillation, vues de dessus.

La Figure 1 montre une enceinte 1 devant renfermer au moins deux éléments devant fonctionner à une température en dessous de l'ambiante voire cryogénique. Ça peut être l'enceinte d'un appareil de séparation d'air, d'un mélange d'hydrogène et de monoxyde de carbone avec éventuellement de l'azote ou de l'argon ou du méthane, un mélange de méthane et d'azote ou un mélange de dioxyde de carbone, d'oxygène et d'azote.

La colonne de distillation 2 est un cylindre vertical devant servir à séparer un mélange tel que décrit. L'élément 2 peut être deux colonnes de distillation superposées, par exemple la colonne moyenne pression et la colonne basse pression d'un appareil de séparation d'air.

Dans ce cas, l'enceinte a une hauteur extrêmement élevée, dépassant 10 m et pouvant être de 15 à 60 m en hauteur. A ces élévations, il est important de réduire la prise au vent de la colonne en orientant la paroi convexe face aux vents prédominants.

L'enceinte 1 comprend également un autre élément 7 pouvant être un échangeur de chaleur et/ou au moins une conduite et/ou au moins un séparateur de phases. Il peut être une ossature en forme de cuboïde contenant des conduites et servant de support pour la colonne. Sinon l'ossature peut simplement contenir les conduites et/ou un échangeur de chaleur sans servir de support à la colonne.

L'ossature peut contenir l'autre élément 7 avec de l'isolation 8 entre l'élément et l'ossature ou bien la structure de l'autre élément 7 peut faire partie de la structure de l'enceinte.

Les parois planes A, B, C sont agencées de sorte que les trois parois planes rectangulaires forment trois des quatre bords d'un premier espace 5 en forme de cuboïde.

Les trois parois droites comprennent une première paroi plane B reliée à un bord libre de la deuxième paroi plane A par un angle droit et reliée à un bord libre de la troisième paroi plane C par un angle droit. Une paroi convexe D délimite un deuxième espace 3 en forme de tronc de cylindre en dehors du premier espace 5.

Les bords libres de la paroi convexe D sont chacun reliés à un bord libre d'une paroi plane A, C. Ainsi le premier espace 5 et le deuxième espace 3 sont jointifs.

La colonne 2 est disposée au moins partiellement du deuxième espace mais une partie de la colonne peut se trouver dans le premier espace.

Il sera compris que la colonne peut se trouver entièrement dans le premier espace et qu'un autre élément 2 peut se trouver à côté de la paroi convexe, par exemple un stockage ou un séparateur de phase.

Les dimensions de la paroi convexe D sont choisies de sorte qu'elle est éloignée de la colonne 2 juste suffisamment pour l'isolation la protège des rentrées de chaleur.

La paroi convexe D est un arc de cercle de diamètre D' et l'élément cylindrique a une section en forme de cercle de diamètre d, les centres des cercles étant éloignés d'au plus 1 m, les cercles D', d étant de préférence concentriques.

Le rapport d/D' est de préférence entre 0,6 et 0,95.

De l'isolation 8 remplit l'espace entre les parois A, B, C, D et les éléments 2,7 ainsi que l'espace entre les éléments 2,7.

La séparation minimale entre la colonne et la paroi convexe la plus proche de la colonne est entre 400 mm et 1000 mm.

La séparation minimale entre l'autre élément et la paroi convexe la plus proche de l'autre élément est entre 400 mm et 1000 mm.

De préférence tout élément dans l'enceinte est séparé de la paroi la plus proche d'au moins 400 mm, voire 500mm.

La colonne 2 a un diamètre d'au moins 1 m, voire au moins 2 m, de préférence au moins 4 m.

La Figure 2 montre une variante de la Figure 1 avec deux éléments cylindriques 2, 4, dont un est une colonne de distillation 2,4 et l'autre 4,2 est un stockage ou une colonne de distillation. Les éléments 2,4 peuvent avoir le même diamètre ou pas. Ici l'élément 2 se trouve partiellement dans le deuxième espace 3 et l'élément 4 entièrement dans le premier espace 5.

Dans ce cas, le deuxième espace est substantiellement plus petit que le premier espace 5.

La Figure 3 montre une variante de la Figure 2 avec deux parois planes parallèles A, B formant les bords plats d'une enceinte avec deux côtés opposés convexes. Ces deux côtés sont formés par deux parois convexes D, E.

Les parois planes A, B sont agencées de sorte que les deux parois planes rectangulaires forment deux bords opposés des quatre bords d'un premier espace 5 en forme de cuboïde. Les deux parois droites comprennent une première paroi plane A reliée à une deuxième paroi plane par les deux parois convexes.

Une paroi convexe D délimite un deuxième espace 3 en forme de tronc de cylindre en dehors du premier espace 5. Les bords libres de la paroi convexe D sont chacun reliés à un bord libre d'une paroi plane A, B.

Une paroi convexe E délimite un deuxième espace 3' en forme de tronc de cylindre en dehors du premier espace 5. Les bords libres de la paroi convexe D sont chacun reliés à un bord libre d'une paroi plane A, B.

Il sera compris que l'enceinte E pourrait être élargie en cas de besoins modifiés en remplaçant la paroi B par la paroi E afin d'augmenter légèrement la prise au sol.

L'enceinte contient deux éléments cylindriques 2, 4, dont un est une colonne de distillation 2,4 et l'autre 4,2 est un stockage ou une colonne de distillation. Les éléments 2,4 peuvent avoir le même diamètre ou pas. Ici l'élément 2 se trouvent partiellement dans le deuxième espace 3 et l'élément 4 partiellement dans une troisième espace 3' et les deux 2,4 sont partiellement dans le premier espace 5. L'élément 7 est disposé entre les éléments 2,4 et entièrement dans le premier espace 5.

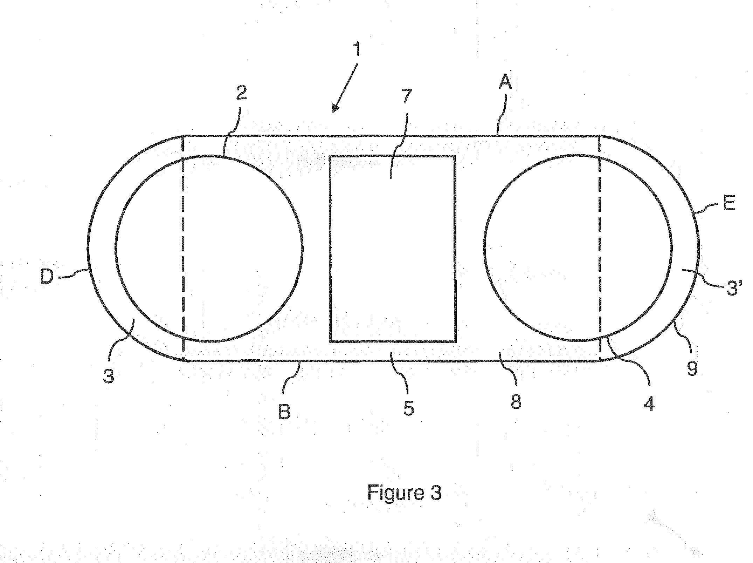

L'élément le plus proche d'au moins une paroi convexe dans toutes les figures est un élément cylindrique 2,4, tel qu'une colonne ou un stockage. Il est possible pour la Figure 3 de remplacer un élément cylindrique 2,4 par un élément non-cylindrique.

Les éléments cylindriques 2,4 ont chacun un diamètre d'au moins 1m, voire au moins 2 m, de préférence au moins 4 m.

De préférence au moins un tiers du volume de l'élément cylindrique 2,4 est situé dans le deuxième espace 3,3'.

Les dimensions des parois convexes D, E sont choisies de sorte qu'elles sont éloignées des colonnes 2, 4 juste suffisamment pour que l'isolation les protège des rentrées de chaleur.

La paroi convexe D est un arc de cercle de diamètre D' et l'élément cylindrique a une section en forme de cercle de diamètre d, les centres des cercles étant éloignés d'au plus 1 m, les cercles D', d étant de préférence concentriques.

Le rapport d/D' est de préférence entre 0,6 et 0,95.

La paroi convexe E est un arc de cercle de diamètre D" et l'élément cylindrique a une section en forme de cercle de diamètre d, les centres des cercles étant éloignés d'au plus 1 m, les cercles D", d étant de préférence concentriques.

Le rapport d/D" est de préférence entre 0,6 et 0,95.

La séparation minimale entre la colonne 2,4 et la paroi convexe D, E la plus proche de la colonne est entre 400 mm et 1000 mm.

La séparation minimale entre l'autre élément 7 et la paroi la plus proche de l'autre élément est entre 400 mm et 1000 mm.

De préférence tout élément dans l'enceinte est séparé de la paroi la plus proche d'au moins 400 mm, voire 500 mm.

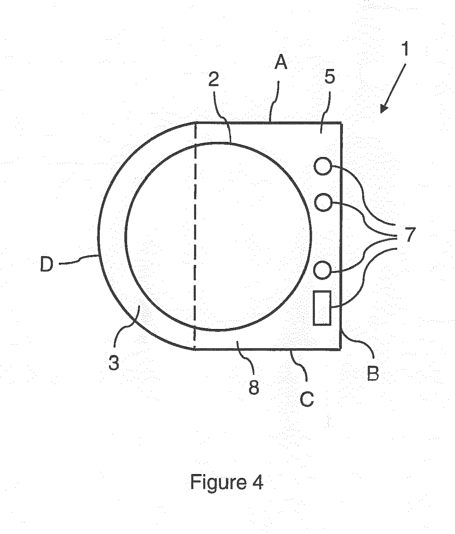

Dans la Figure 4, l'enceinte 1 est beaucoup plus réduite, plus que le quart, voire la moitié du volume de l'enceinte étant occupé par la colonne 2, placé à proximité de la paroi convexe D. La partie de l'enceinte à proximité de la paroi plane B à l'opposé de la paroi convexe D est occupée par des accessoires de la colonne 7, par exemple au moins une conduite, au moins un échangeur de chaleur. Ces accessoires peuvent être montés dans une ossature qui peut être contenue dans l'enceinte 1 ou qui peut faire partie de l'enceinte 1, ainsi facilitant la mise en place de l'appareil.

La colonne 2 a un diamètre d'au moins 1 m, voire au moins 2 m, de préférence au moins 4 m.

Pour transporter une partie d'une enceinte de colonne de distillation, on transporte au moins une paroi convexe D, E par un moyen de transport pouvant être un camion ou un bateau dans laquelle au moins une paroi convexe est disposée sur une surface plate du moyen de transport, reposant sur les bords libres de la paroi convexe.

Éventuellement, plusieurs parois convexes D, E sont empilées les unes sur les autres et sont transportées par le moyen de transport.

Eventuellement l'élément peut être une conduite d'un diamètre d'au moins 50 cm. colonne 7, par exemple au moins une conduite, au moins un échangeur de chaleur. Ces accessoires peuvent être montés dans une ossature qui peut être contenue dans l'enceinte 1 ou qui peut faire partie de l'enceinte 1, ainsi facilitant la mise en place de l'appareil.

La colonne 2 a un diamètre d'au moins 1 m, voire au moins 2 m, de préférence au moins 4 m.

Pour transporter une partie d'une enceinte de colonne de distillation, on transporte au moins une paroi convexe D, E par un moyen de transport pouvant être un camion ou un bateau dans laquelle au moins une paroi convexe est disposée sur une surface plate du moyen de transport, reposant sur les bords libres de la paroi convexe.

Éventuellement, plusieurs parois convexes D, E sont empilées les unes sur les autres et sont transportées par le moyen de transport.

Eventuellement l'élément peut être une conduite d'un diamètre d'au moins 50 cm.

## Revendications

1. Enceinte (1) de colonne de distillation (2,4) devant fonctionner à une température en dessous de 0°C, voire cryogénique comprenant une colonne de distillation (2,4) cylindrique devant fonctionner à une température en dessous de 0°C, de l'isolation (8), au moins quatre parois verticales extérieures (A,B,C,D), ayant toutes la même hauteur dans le sens vertical les au moins quatre parois comprenant au moins deux parois planes rectangulaires (A,B,C), éventuellement un autre élément cylindrique devant fonctionner à une température en dessous de 0°C qui est un stockage ou un séparateur de phases, et un toit, la colonne se trouvant à l'intérieur de l'enceinte, les au moins quatre parois comprenant au moins une paroi convexe extérieure (D,E), l'élément (2,4) le plus proche de la paroi convexe étant la colonne de distillation ou l'autre élément et comprenant
i) deux parois planes rectangulaires (A,B) et deux parois convexes (D,E), définissant un premier espace en forme de cuboïde (5) avec de part et l'autre un deuxième espace en forme de tronc de cylindre (3,3') ou
ii) trois parois planes rectangulaires (A,B,C) entourant un premier espace (5) en forme de cuboïde, les trois parois droites comprenant une première paroi plane (B) reliée à un bord libre de la deuxième paroi plane (A) par un angle droit et reliée à un bord libre de la troisième paroi plane (C) par un angle droit ainsi qu'une paroi convexe, délimitant un deuxième espace (3) constitué par une paroi convexe (D) en dehors du premier espace, les bords libres de la paroi convexe étant chacun relié à un bord libre d'une paroi plane, de sorte que le premier espace et le deuxième espace sont jointifs.

2. Enceinte selon la revendication 1 dans laquelle l'au moins une paroi convexe (D,E) a un bord qui est un arc d'un cylindre droit circulaire ou oval et éventuellement le deuxième espace est un demi-cylindre.

3. Enceinte selon la revendication 1 dans laquelle toutes les parois (A,B,C,D) ont la même hauteur dans le sens vertical.

4. Enceinte selon l'une des revendications précédentes contenant au moins deux colonnes de distillation superposées (2) et éventuellement un stockage et/ou un échangeur de chaleur (7) et/ou des conduites (7) et/ou un séparateur de phases.

5. Enceinte selon la revendication 1 dans lequel au moins un tiers du volume de l'élément cylindrique (2,4) est situé dans le deuxième espace (3, 3').

6. Enceinte selon la revendication 5 et selon la revendication 1 dans laquelle seule une partie du volume de l'élément cylindrique (2,4) est située dans le premier espace (5).

7. Enceinte selon l'une des revendications 1, 5 ou 6 dans lequel la paroi convexe (D,E) est un arc de cercle de diamètre D' et l'élément cylindrique a une section en forme de cercle de diamètre d, les centres des cercles étant éloignés d'au plus 1 , les cercles étant de préférence concentriques.

8. Enceinte selon la revendication 7 dans laquelle le rapport d/D' est entre 0,6 et 0,95.

9. Enceinte selon l'une des revendications précédentes contenant de la matière isolante (8), par exemple étant remplie d'isolant pulvérulent.

10. Enceinte selon la revendications 1 comprenant une ossature (7) en forme de cuboïde contenant des conduites et servant de support pour la colonne et/ou les conduites et/ou un échangeur de chaleur, l'ossature étant contenue entièrement dans le premier espace de l'enceinte.

11. Enceinte selon la revendication 10 dans laquelle la colonne de distillation (2) est partiellement contenue dans l'ossature (7).

## Patentansprüche

1. Gehäuse (1) für eine Destillationskolonne (2,4) zum Betrieb bei einer Temperatur unterhalb von 0 °C oder zur kryogenen Destillation, umfassend eine zylindrische Destillationskolonne (2,4) zum Betrieb bei einer Temperatur unterhalb von 0 °C, Isolation (8), mindestens vier vertikale Außenwände (A,B,C,D), die sämtlich in vertikaler Richtung dieselbe Höhe haben, wobei die mindestens vier Wände mindestens zwei rechteckige ebene Wände (A,B,C) umfassen, gegebenenfalls ein anderes zylindrisches Element zum Betrieb bei einer Temperatur unterhalb von 0 °C, bei dem es sich um eine Aufbewahrung oder einen Phasentrenner handelt, und ein Dach, wobei sich die Kolonne im Inneren des Gehäuses befindet, wobei die mindestens vier Wände mindestens eine konvexe Außenwand (D,E) umfassen, wobei das Element (2,4), das sich am nächsten bei der konvexen Wand befindet, die Destillationskolonne oder das andere Element ist, und umfassend
i) zwei ebene rechteckige Wände (A,B) und zwei konvexe Wände (D,E), die einen ersten quaderförmigen Raum (5) mit einem kegelstumpfförmigen zweiten Raum (3,3') auf beiden Seiten bilden, oder
ii) drei ebene rechteckige Wände (A,B,C), die einen ersten quaderförmigen Raum (5) umschließen, wobei die drei geraden Wände eine erste ebene Wand (B) umfassen, die mit einer freien Kante der zweiten ebenen Wand (A) durch einen rechten Winkel verbunden ist und mit einer freien Kante der dritten ebenen Wand (C) durch einen rechten Winkel verbunden ist, sowie eine konvexe Wand, die einen zweiten Raum (3) umschließt, der aus einer konvexen Wand (D) außerhalb des ersten Raums besteht, wobei die freien Kanten der konvexen Wand jeweils mit einer freien Kante einer ebenen Wand so verbunden sind, dass der erste Raum und der zweite Raum aneinander grenzen.

2. Gehäuse nach Anspruch 1, wobei die mindestens eine konvexe Wand (D,E) eine Kante besitzt, die ein Segment eines kreisförmigen oder ovalen geraden Zylinders ist, und gegebenenfalls der zweite Raum ein Halbzylinder ist.

3. Gehäuse nach Anspruch 1, wobei alle Wände (A,B,C,D) in vertikaler Richtung dieselbe Höhe haben.

4. Gehäuse nach einem der vorhergehenden Ansprüche, das mindestens zwei übereinander angebrachte Destillationskolonnen (2) und gegebenenfalls eine Aufbewahrung und/oder einen Wärmeaustauscher (7) und/oder Leitungen (7) und/oder einen Phasentrenner enthält.

5. Gehäuse nach Anspruch 1, wobei sich mindestens ein Drittel des Volumens des zylindrischen Elements (2,4) in dem zweiten Raum (3,3') befindet.

6. Gehäuse nach Anspruch 5 und nach Anspruch 1, wobei sich nur ein Teil des Volumens des zylindrischen Elements (2,4) im ersten Raum (5) befindet.

7. Gehäuse nach einem der Ansprüche 1, 5 oder 6, wobei die konvexe Wand (D,E) ein Kreisbogen mit dem Durchmesser D' ist und das zylindrische Element einen kreisförmigen Querschnitt mit dem Durchmesser d hat, wobei die Mittelpunkte der Kreise höchstens 1 m voneinander beabstandet sind, wobei die Kreise vorzugsweise konzentrisch sind.

8. Gehäuse nach Anspruch 7, wobei das Verhältnis d/D' zwischen 0,6 und 0,95 beträgt.

9. Gehäuse nach einem der vorhergehenden Ansprüche, das Isoliermaterial (8) enthält, zum Beispiel mit pulverförmiger Isolierung gefüllt ist.

10. Gehäuse nach Anspruch 1, umfassend ein quaderförmiges Gerüst (7), das Leitungen enthält und als Träger für die Kolonne und/oder die Leitungen und/oder einen Wärmeaustauscher dient, wobei das Gerüst vollständig im ersten Raum des Gehäuses aufgenommen ist.

11. Gehäuse nach Anspruch 10, wobei die Destillationskolonne (2) teilweise in dem Gerüst (7) aufgenommen ist.

## Claims

1. Chamber (1) for a distillation column (2, 4) that is to operate at a temperature below 0°C, or even at cryogenic temperature, comprising a cylindrical distillation column (2, 4) that is to operate at a temperature below 0°C, insulation (8), at least four vertical exterior walls (A, B, C, D), all having the same height in the vertical direction, the at least four walls comprising at least two rectangular planar walls (A, B, C), possibly another cylindrical element that is to operate at a temperature below 0°C and which is a storage facility or a phase separator, and a roof, the column being inside the chamber, the at least four walls comprising at least one convex exterior wall (D, E), the element (2,4) closest to the convex wall being the distillation column or the other element and comprising:
i)two rectangular planar walls (A, B) and two convex walls (D, E), defining a first space (5) in the shape of a cuboid, with, on each side, a second space (3, 3') in the shape of a truncated cylinder, or
ii)three rectangular planar walls (A, B, C) surrounding a first space (5) in the shape of a cuboid, the three straight walls comprising a first planar wall (B) connected to a free edge of the second planar wall (A) by a right angle and connected to a free edge of the third planar wall (C) by a right angle, and a convex wall, delimiting a second space (3) consisting of a convex wall (D) outside of the first space, the free edges of the convex wall each being connected to a free edge of a planar wall so that the first space and the second space are contiguous.

2. Chamber according to Claim 1, in which the at least one convex wall (D, E) has one edge which is an arc of a right circular or oval cylinder and the second space is potentially a half-cylinder.

3. Chamber according to Claim 1, in which all the walls (A, B, C, D) have the same height in the vertical direction.

4. Chamber according to one of the preceding claims, containing at least two stacked distillation columns (2) and possibly a storage facility and/or a heat exchanger (7) and/or pipes (7) and/or a phase separator.

5. Chamber according to Claim 1, in which at least one third of the volume of the cylindrical element (2, 4) is situated in the second space (3, 3').

6. Chamber according to Claim 5 and according to Claim 1, in which just part of the volume of the cylindrical element (2, 4) is situated in the first space (5).

7. Chamber according to one of Claims 1, 5 or 6, in which the convex wall (D, E) is an arc of a circle of diameter D' and the cylindrical element has a cross section in the shape of a circle of diameter d, the centres of the circles being at least 1 m apart, the circles preferably being concentric.

8. Chamber according to Claim 7, in which the ratio d/D' is between 0.6 and 0.95.

9. Chamber according to one of the preceding claims, containing insulation (8), for example being filled with powdered insulation.

10. Chamber according to Claim 1, comprising a framework (7) in the shape of a cuboid containing pipes and acting as a support for the column and/or the pipes and/or a heat exchanger, the framework being contained wholly in the first space of the chamber.

11. Chamber according to Claim 10, in which the distillation column (2) is partially contained in the framework (7).
